(19) **Europäisches Patentamt / European Patent Office / Office européen des brevets**

(11) **EP 3 259 855 B1**

(12) **FASCICULE DE BREVET EUROPEEN**

(45) Date de publication et mention de la délivrance du brevet:
**10.04.2019 Bulletin 2019/15**

(21) Numéro de dépôt: **16713516.9**

(22) Date de dépôt: **19.02.2016**

(51) Int Cl.:
*H04B 7/26* (2006.01)     *H04W 74/04* (2009.01)
*H04L 5/00* (2006.01)     *H04W 72/04* (2009.01)
*H04W 28/06* (2009.01)

(86) Numéro de dépôt international:
**PCT/FR2016/050383**

(87) Numéro de publication internationale:
**WO 2016/132081 (25.08.2016 Gazette 2016/34)**

(54) **PROCÉDÉ ET SYSTÈME DE COMMUNICATION SANS FIL ENTRE DES TERMINAUX ET DES STATIONS DE BASE SEMI-DUPLEX**

VERFAHREN UND SYSTEM FÜR DIE DRAHTLOSE KOMMUNIKATION ZWISCHEN TERMINAL UND BASISSTATIONEN HALF DUPLEX

METHOD AND SYSTEM FOR WIRELESS COMMUNICATION BETWEEN TERMINAL AND BASE STATIONS HALF-DUPLEX

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.02.2015 FR 1551394**

(43) Date de publication de la demande:
**27.12.2017 Bulletin 2017/52**

(73) Titulaire: **SIGFOX**
**31670 Labège (FR)**

(72) Inventeurs:
- **ZIRPHILE, Lionel**
  **31520 Ramonville Saint Agne (FR)**
- **CHALBOS, Nicolas**
  **31600 Eaunes (FR)**
- **FOURTET, Christophe**
  **82170 Pompignan (FR)**

(74) Mandataire: **Ipside**
**6, Impasse Michel Labrousse**
**31100 Toulouse (FR)**

(56) Documents cités:
**US-A- 6 130 914**

- **DO MINH-TIEN ET AL: "On the benefits of random FDMA schemes in ultra narrow band networks", 2014 12TH INTERNATIONAL SYMPOSIUM ON MODELING AND OPTIMIZATION IN MOBILE, AD HOC, AND WIRELESS NETWORKS (WIOPT), IFIP, 12 mai 2014 (2014-05-12), pages 672-677, XP032616557, DOI: 10.1109/WIOPT.2014.6850364**
- **SHIKAI ZHANG: "Efficient Communication Method for Sensor and Sensor Networks", FUTURE COMPUTER SCIENCES AND APPLICATION (ICFCSA), 2011 INTERNATIONAL CONFERENCE ON, IEEE, 18 juin 2011 (2011-06-18), pages 101-104, XP031912345, DOI: 10.1109/ICFCSA.2011.30 ISBN: 978-1-4577-0317-1**

## Description

## DOMAINE TECHNIQUE

La présente invention appartient au domaine des télécommunications numériques, et concerne plus particulièrement un procédé et un système de communication sans fil entre des terminaux et un réseau d'accès.

## ÉTAT DE LA TECHNIQUE

La présente invention trouve une application particulièrement avantageuse, bien que nullement limitative, dans les systèmes de communication sans fil à bande ultra étroite. Par « bande ultra étroite » (« Ultra Narrow Band » ou UNB dans la littérature anglosaxonne), on entend que le spectre fréquentiel instantané des signaux radioélectriques émis par les terminaux est de largeur fréquentielle inférieure à un kilohertz.

De tels systèmes de communication sans fil UNB sont particulièrement adaptés pour des applications du type M2M (acronyme anglo-saxon pour « Machine-to-Machine ») ou du type « Internet des objets » (« Internet of Things » ou IoT dans la littérature anglosaxonne).

Dans un tel système de communication sans fil UNB, les échanges de données sont essentiellement monodirectionnels, en l'occurrence sur un lien montant entre des terminaux et un réseau d'accès dudit système.

Les terminaux émettent des messages montants qui sont collectés par des stations de base du réseau d'accès, sans avoir à s'associer préalablement à une ou plusieurs stations de base du réseau d'accès. En d'autres termes, les messages montants émis par un terminal ne sont pas destinés à une station de base spécifique du réseau d'accès, et le terminal émet ses messages montants en supposant qu'ils pourront être reçus par au moins une station de base. De telles dispositions sont avantageuses en ce que le terminal n'a pas besoin de réaliser des mesures régulières, gourmandes notamment d'un point de vue consommation électrique, pour déterminer la station de base la plus appropriée pour recevoir ses messages montants. La complexité repose sur le réseau d'accès, qui doit être capable de recevoir des messages montants pouvant être émis à des instants arbitraires et sur des fréquences centrales arbitraires. Chaque station de base du réseau d'accès reçoit des messages montants des différents terminaux qui sont à sa portée.

Un tel mode de fonctionnement, dans lequel les échanges de données sont essentiellement monodirectionnels, est tout à fait satisfaisant pour de nombreuses applications, comme par exemple la télé-relève de compteurs de gaz, d'eau, d'électricité, la télésurveillance de bâtiments ou de maisons, etc.

Dans certaines applications cependant, il peut être avantageux de pouvoir également effectuer des échanges de données dans l'autre direction, à savoir sur un lien descendant du réseau d'accès vers les terminaux, par exemple pour reconfigurer un terminal et/ou commander un actionneur relié audit terminal. Toutefois, il est nécessaire d'offrir une telle capacité en limitant l'impact sur la consommation électrique des terminaux.

Le brevet US 6130914 décrit un exemple de système de communication sans fil UNB bidirectionnel permettant de limiter l'impact sur la consommation électrique des terminaux.

En effet, dans le brevet US 6130914, un message descendant est émis, à destination d'un terminal, au cours d'une fenêtre d'écoute prédéterminée par rapport un message montant émis par ledit terminal. Plus particulièrement, après avoir émis un message montant, un terminal passe dans un mode veille (ou économie d'énergie) sur une fenêtre de veille de durée prédéterminée. A la fin de ladite fenêtre de veille, le terminal quitte le mode veille pour écouter le lien descendant sur une fenêtre d'écoute de durée limitée, en attente d'un message descendant émis par une station de base.

Côté réseau d'accès, les fenêtres d'écoute des différents terminaux peuvent être déterminées à partir des messages montants reçus de ces terminaux, et le réseau d'accès doit organiser l'émission des messages descendants pour qu'ils puissent être reçus, par les terminaux correspondants, au cours des fenêtres d'écoute respectives desdits terminaux.

Du fait que les terminaux n'écoutent le lien descendant que sur des fenêtres d'écoute prédéterminées, la consommation électrique additionnelle requise pour la réception de messages descendants est limitée, et lesdits terminaux peuvent être le plus souvent en mode veille. En outre, du fait qu'ils ne doivent pas émettre et recevoir simultanément, de tels terminaux peuvent être semi-duplex (« half-duplex » dans la littérature anglosaxonne), et peuvent donc être peu coûteux à fabriquer.

En outre, les terminaux n'étant pas préalablement associés à des stations de base particulières, le réseau d'accès ne sait pas quels terminaux sont à portée des différentes stations de base. Ce problème est également résolu puisqu'un terminal n'écoute qu'après avoir émis un message montant, de sorte qu'il suffit d'utiliser une station de base ayant reçu ledit message montant pour émettre le message descendant à destination de ce terminal.

Toutefois, pour de tels systèmes de communication sans fil UNB bidirectionnels, on souhaite également, pour des raisons notamment de coût de déploiement du réseau d'accès, utiliser des stations de base semi-duplex, c'est-à-dire des stations de base qui peuvent recevoir des messages montants et émettre des messages descendants, mais pas simultanément. Dans un tel cas, on comprend qu'une station de base qui passe dans un mode émission, pour émettre un message descendant à destination d'un terminal, n'est plus disponible pour recevoir des messages montants émis par d'autres terminaux, de sorte que de nombreux messages montants peuvent ainsi être manqués.

## EXPOSÉ DE L'INVENTION

La présente invention a pour objectif de remédier à tout ou partie des limitations des solutions de l'art antérieur, notamment celles exposées ci-avant, en proposant une solution qui permette d'avoir des échanges de données bidirectionnels tout en limitant les durées d'indisponibilité en réception des différentes stations de base du réseau d'accès.

A cet effet, et selon un premier aspect, l'invention concerne un procédé de communication sans fil entre une pluralité de terminaux et un réseau d'accès, lesdits terminaux émettant de façon asynchrone des messages montants sur un lien montant à destination du réseau d'accès, ledit réseau d'accès étant configuré pour émettre des messages descendants sur un lien descendant en réponse à tout ou partie des messages montants, ledit réseau d'accès comportant une pluralité de stations de base configurées pour émettre des messages descendants dans des fenêtres d'émission au cours desquelles lesdites stations de base ne peuvent pas recevoir de messages montants. Chaque terminal en attente d'un message descendant en réponse à un message montant émis étant configuré pour écouter le lien descendant sur une fenêtre d'écoute prédéterminée par rapport audit message montant, ladite fenêtre d'écoute étant de durée au moins cinq fois supérieure à la durée du message descendant, le procédé comporte des étapes de :

- détermination si des fenêtres d'écoute de terminaux en attente de messages descendants présentent un recouvrement,
- lorsqu'il existe un recouvrement adapté à l'émission de plusieurs messages descendants par une même station de base : émission desdits messages descendants regroupés dans une même fenêtre d'émission de ladite station de base, à l'intérieur dudit recouvrement.

Ainsi, les terminaux écoutent le lien descendant sur une fenêtre d'écoute de durée beaucoup plus importante que nécessaire pour recevoir les messages descendants. De telles dispositions permettent d'augmenter la probabilité d'avoir des fenêtres d'écoute de terminaux différents qui se recouvrent partiellement, et donc d'augmenter la probabilité de pouvoir regrouper les messages descendants à destination de ces terminaux et de les émettre au moyen d'une même station de base.

Lorsqu'un recouvrement entre fenêtres d'écoute de différents terminaux permet l'émission des messages descendants correspondants par une même station de base, alors lesdits messages descendants sont avantageusement regroupés dans une même fenêtre d'émission de ladite station de base. Ainsi, la durée d'indisponibilité en réception de la station de base peut être limitée. En effet, la durée d'indisponibilité en réception d'une station de base est déterminée par la durée des fenêtres d'émission, mais également par les durées de basculement d'un mode réception de ladite station de base à un mode émission, et inversement. En configurant une seule fenêtre d'émission pour émettre plusieurs messages descendants, le nombre de basculements entre mode réception et mode émission est fortement réduit, et la durée d'indisponibilité en réception associée l'est également.

Dans des modes particuliers de mise en oeuvre, le procédé de communication sans fil peut comporter en outre l'une ou plusieurs des caractéristiques suivantes, prises isolément ou selon toutes les combinaisons techniquement possibles.

Dans des modes particuliers de mise en oeuvre, lorsque des messages descendants sont émis regroupés dans une même fenêtre d'émission d'une station de base, au moins deux messages descendants sont émis simultanément sur des fréquences centrales respectives différentes.

De telles dispositions permettent de réduire davantage la durée d'indisponibilité en réception des stations de base. En effet, en émettant les messages descendants simultanément (c'est-à-dire avec un recouvrement temporel non nul entre lesdits messages descendants), alors la durée nécessaire pour émettre lesdits messages descendants est significativement inférieure à la somme des durées respectives desdits messages descendants.

Dans des modes particuliers de mise en oeuvre, la fréquence centrale d'un message descendant émis en réponse à un message montant est déterminée en fonction de la fréquence centrale dudit message montant.

Dans des modes particuliers de mise en oeuvre, lorsque des messages descendants sont émis regroupés dans une même fenêtre d'émission d'une station de base, au moins deux messages descendants sont émis successivement.

Ainsi, les messages descendants peuvent également être regroupés temporellement (c'est-à-dire émis successivement, sans recouvrement temporel). De telles dispositions peuvent s'avérer avantageuses, notamment, lorsque deux messages descendants doivent être émis sur la même fréquence centrale et ne peuvent par conséquent pas être émis simultanément. De telles dispositions peuvent également s'avérer avantageuses pour limiter la puissance instantanée des signaux radioélectriques émis par la station de base, ou pour émettre plus facilement des messages descendants utilisant des protocoles de communications respectifs différents, etc.

Dans des modes particuliers de mise en oeuvre, lorsque plusieurs messages descendants peuvent être regroupés dans une même fenêtre d'émission d'une station de base, lesdits messages descendants sont regroupés fréquentiellement, c'est-à-dire émis simultanément sur des fréquences centrales respectives différentes, tant que la puissance instantanée totale desdits messages descendants regroupés fréquentiellement est inférieure à une puissance maximale prédéfinie, puis sont regroupés temporellement, c'est-à-dire émis successivement, si ladite puissance instantanée totale desdits messages descendants regroupés fréquentiellement devient supérieure à ladite puissance maximale.

Ainsi, la puissance instantanée totale peut être maintenue inférieure à une puissance maximale prédéfinie pendant toute la durée de la fenêtre d'émission (par exemple pour respecter des contraintes réglementaires), tout en minimisant la durée d'indisponibilité en réception de la station de base, en privilégiant lorsque c'est possible le regroupement fréquentiel des messages descendants par rapport au regroupement temporel.

Dans des modes particuliers de mise en oeuvre, lorsque des messages descendants sont émis regroupés dans une même fenêtre d'émission d'une station de base, au moins un message descendant est émis avec un débit supérieur au débit du message montant en réponse auquel ledit message descendant est émis.

De telles dispositions permettent de réduire davantage la durée d'indisponibilité en réception de la station de base. En effet, en émettant un ou, de préférence, chaque message descendant avec un débit supérieur au débit des messages montants, alors la durée d'émission des messages descendants sera réduite comparativement à ce qu'elle aurait été en utilisant le même débit que celui des messages montants.

Dans des modes particuliers de mise en oeuvre, le système de communications sans fil comportant également plusieurs terminaux, dits « terminaux asynchrones en réception », adaptés à recevoir des messages descendants à tout instant, ledit procédé comporte, lorsqu'un message descendant doit être émis à destination d'un terminal asynchrone en réception, des étapes de :

- détermination si ledit message descendant peut être émis par une station de base prévue pour émettre un message descendant en réponse à un message montant émis par un terminal, dit « terminal synchrone en réception »,
- lorsque ledit message descendant à destination du terminal asynchrone en réception peut être émis par la station de base prévue pour émettre un message descendant à destination d'un terminal synchrone en réception : émission desdits messages descendants regroupés dans une même fenêtre d'émission de ladite station de base.

Ainsi, plusieurs types de terminaux peuvent coexister dans le système de communication sans fil :

- des terminaux synchrones en réception, c'est-à-dire des terminaux qui ne peuvent recevoir des messages descendants qu'au cours de fenêtres d'écoute prédéterminées par rapport à des messages montants qu'ils ont émis,
- des terminaux asynchrones en réception, qui peuvent recevoir des messages descendants à tout instant.

Dans un tel cas, il est possible de regrouper, pour une émission dans une même fenêtre d'émission d'une station de base, des messages descendants à destination de terminaux synchrones en réception et des messages descendants à destination de terminaux asynchrones en réception.

Selon un second aspect, la présente invention concerne un terminal d'un système de communications sans fil, ledit terminal étant adapté à émettre des messages montants sur un lien montant à destination d'un réseau d'accès, ledit réseau d'accès étant adapté à émettre des messages descendants sur un lien descendant à destination dudit terminal en réponse à tout ou partie des messages montants, ledit terminal étant configuré pour, lorsqu'il a émis un message montant en réponse auquel le réseau d'accès doit émettre un message descendant, écouter le lien descendant, pour recevoir le message descendant, sur une fenêtre d'écoute prédéterminée par rapport audit message montant. Selon l'invention, la durée de la fenêtre d'écoute est au moins cinq fois supérieure à la durée du message descendant.

Dans des modes particuliers de réalisation, le terminal est configuré pour, lorsqu'il a émis un message montant en réponse auquel le réseau d'accès doit émettre un message descendant, passer dans un mode veille sur une fenêtre de veille de durée prédéterminée et, après la fenêtre de veille, écouter le lien descendant sur la fenêtre d'écoute.

Selon un troisième aspect, la présente invention concerne un réseau d'accès d'un système de communications sans fil comportant une pluralité de stations de base configurées pour émettre des signaux radioélectriques dans des fenêtres d'émission au cours desquelles lesdites stations de base ne peuvent pas recevoir de signaux radioélectriques. Ledit système comportant une pluralité de terminaux selon l'un quelconque des modes de réalisation de l'invention, lesdits terminaux émettant de façon asynchrone des messages montants sur le lien montant, le réseau d'accès est en outre configuré pour :

- déterminer si des fenêtres d'écoute de terminaux en attente de messages descendants présentent un recouvrement,
- lorsqu'il existe un recouvrement adapté à l'émission de plusieurs messages descendants par une même station de base : émettre lesdits messages descendants regroupés dans une même fenêtre d'émission de ladite station de base, à l'intérieur dudit recouvrement.

Dans des modes particuliers de réalisation, le réseau d'accès peut comporter en outre l'une ou plusieurs des caractéristiques suivantes, prises isolément ou selon toutes les combinaisons techniquement possibles.

Dans des modes particuliers de réalisation, lorsque des messages descendants sont émis regroupés dans une même fenêtre d'émission d'une station de base, au moins deux messages descendants sont émis simultanément sur des fréquences centrales respectives différentes.

Dans des modes particuliers de réalisation, la fréquence centrale d'un message descendant émis en réponse à un message montant reçu est déterminée en fonction de la fréquence centrale, mesurée par ledit réseau d'accès, dudit message montant reçu.

Dans des modes particuliers de réalisation, lorsque des messages descendants sont émis regroupés dans une même fenêtre d'émission d'une station de base, au moins deux messages descendants sont émis successivement.

Dans des modes particuliers de réalisation, chaque station de base est configurée pour fonctionner par défaut dans un mode réception, dans lequel ladite station de base peut recevoir des messages montants mais ne peut pas émettre de messages descendants.

Selon un quatrième aspect, la présente invention concerne un système de communication sans fil comportant une pluralité de terminaux selon l'un quelconque des modes de réalisation de l'invention et un réseau d'accès selon l'un quelconque des modes de réalisation de l'invention.

**PRÉSENTATION DES FIGURES**

L'invention sera mieux comprise à la lecture de la description suivante, donnée à titre d'exemple nullement limitatif, et faite en se référant aux figures qui représentent :

- Figure 1 : une représentation schématique d'un système de communication sans fil,
- Figure 2 : un diagramme illustrant les principales étapes d'un procédé de communication sans fil,
- Figure 3 : des diagrammes temporels illustrant le principe de la recherche de recouvrement entre fenêtres d'écoute de terminaux différents,
- Figures 4, 5 et 6 : des représentations schématiques de différentes stratégies de regroupement de messages descendants dans un recouvrement entre fenêtres d'écoute de terminaux différents.

Dans ces figures, des références identiques d'une figure à une autre désignent des éléments identiques ou analogues. Pour des raisons de clarté, les éléments représentés ne sont pas à l'échelle, sauf mention contraire.

**DESCRIPTION DÉTAILLÉE DE MODES DE RÉALISATION**

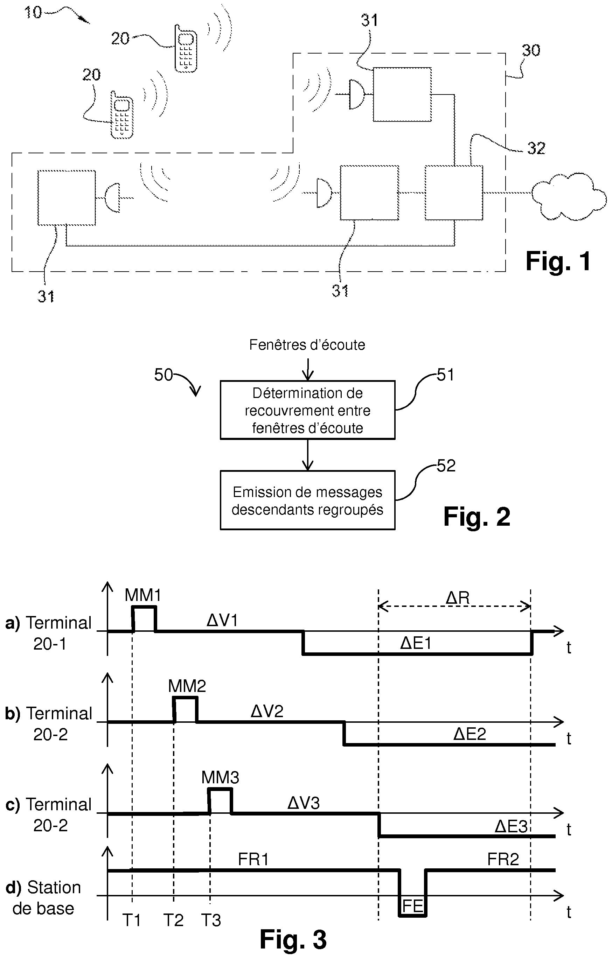

La figure 1 représente schématiquement un système 10 de communication sans fil, par exemple de type UNB, comportant plusieurs terminaux 20 et un réseau d'accès 30 comportant plusieurs stations de base 31.

Les terminaux 20 et les stations de base 31 du réseau d'accès échangent des données sous la forme de signaux radioélectriques. Par « signal radioélectrique », on entend une onde électromagnétique se propageant via des moyens non filaires, dont les fréquences sont comprises dans le spectre traditionnel des ondes radioélectriques (quelques hertz à plusieurs centaines de gigahertz).

Les terminaux 20 sont adaptés à émettre des messages montants de façon asynchrone sur un lien montant à destination du réseau d'accès 30. Par « émettre de façon asynchrone », on entend que les terminaux 20 déterminent de manière autonome quand ils émettent, sans coordination desdits terminaux 20 entre eux et avec les stations de base 31 du réseau d'accès 30.

Chaque station de base 31 est adaptée à recevoir les messages montants des terminaux 20 qui se trouvent à sa portée. Chaque message montant ainsi reçu est par exemple transmis à un serveur 32 du réseau d'accès 30, éventuellement accompagné d'autres informations comme un identifiant de la station de base 31 qui l'a reçu, la puissance dudit message montant reçu, la date de réception dudit message montant, etc. Le serveur 32 traite par exemple l'ensemble des messages montants reçus des stations de base 31.

En outre, le réseau d'accès 30 est également adapté à émettre, par l'intermédiaire des stations de base 31, des messages descendants sur un lien descendant à destination des terminaux 20, lesquels sont adaptés à les recevoir. Le réseau d'accès 30 peut émettre un message descendant en réponse à chaque message montant reçu, ou bien n'émettre des messages descendants qu'en réponse à certains messages montants. Par exemple, le réseau d'accès 30 peut ne répondre qu'après avoir reçu un nombre prédéfini de messages montants d'un même terminal 20, ou ne répondre qu'à des messages montants comportant une requête à cet effet, etc.

Pour des raisons de coût de déploiement du réseau d'accès 30, les stations de base 31 sont du type semi-duplex. En d'autres termes, les stations de base 31 peuvent recevoir des messages montants et émettre des messages descendants, mais pas simultanément. Ainsi, chaque station de base 31 peut être alternativement placée dans :

- un mode réception, dans lequel ladite station de base 31 peut recevoir des messages montants sur une fenêtre de réception mais ne peut pas émettre de messages descendants,
- un mode émission, dans lequel ladite station de base 31 peut émettre des messages descendants sur une fenêtre d'émission mais ne peut pas recevoir de messages montants.

Dans la suite de la description, on se place de manière non limitative dans le cas où chaque terminal 20 est du type synchrone en réception. En d'autres termes, chaque terminal 20 ne peut recevoir un message descendant qu'au cours d'une fenêtre d'écoute prédéterminée par rapport au dernier message montant émis par ledit terminal 20.

Du fait qu'ils n'ont pas à émettre et à recevoir simultanément, de tels terminaux 20 sont, dans des modes préférés de réalisation, du type semi-duplex, afin d'en réduire les coûts de fabrication.

La fenêtre d'écoute d'un terminal 20 peut débuter immédiatement après avoir émis un message montant, en particulier si les temps de réponse du réseau d'accès 30 sont courts. Toutefois, dans des modes préférés de réalisation, chaque terminal 20, après avoir émis un message montant, est configuré pour passer dans un mode veille sur une fenêtre de veille de durée prédéterminée connue également du réseau d'accès 30. De manière conventionnelle, le mode veille est un mode de fonctionnement optimisé pour réduire la consommation électrique, dans lequel ledit terminal 20 ne peut notamment ni recevoir des messages descendants, ni émettre des messages montants. Par exemple, la durée de la fenêtre de veille est choisie égale ou supérieure au temps de réponse minimal du réseau d'accès 30.

Dans la suite de la description, on se place de manière non limitative dans le cas où chaque terminal 20 est configuré pour passer en mode veille après avoir émis un message montant.

Après la fenêtre de veille, le terminal 20 quitte le mode veille pour écouter le lien descendant dans l'attente d'un message descendant, sur une fenêtre d'écoute de durée prédéterminée.

Par « durée de la fenêtre d'écoute », on entend la durée maximale pendant laquelle le terminal 20 est configuré pour écouter le lien descendant dans l'attente d'un message descendant. Ainsi, si le terminal 20 reçoit le message descendant avant la fin de la fenêtre d'écoute, il peut cesser d'écouter le lien descendant dès la fin dudit message descendant, même si la fenêtre d'écoute n'est pas encore terminée. Par contre, le terminal 20 écoute le lien descendant tant qu'aucun message descendant n'a été reçu et tant que la fenêtre d'écoute n'est pas terminée. A la fin de la fenêtre d'écoute, le terminal 20 cesse d'écouter le lien descendant, même si aucun message descendant n'a été reçu. De préférence, le terminal 20 repasse alors en mode veille, par exemple jusqu'à l'émission du prochain message montant.

Il est à noter que, si un terminal 20 sait a priori qu'aucun message descendant ne sera émis par le réseau d'accès 30 (par exemple du fait que le message montant qu'il a émis ne comportait pas de requête à cet effet), alors ledit terminal 20 n'écoute pas le lien descendant, et reste de préférence en mode veille, par exemple jusqu'à l'émission du prochain message montant.

Avantageusement, la fenêtre d'écoute de chaque terminal 20 est de durée au moins cinq fois supérieure à la durée du message descendant que doit recevoir ledit terminal.

De telles dispositions permettent d'augmenter la probabilité d'avoir des fenêtres d'écoute de terminaux 20 différents qui se recouvrent partiellement. Plus la durée de la fenêtre d'écoute est importante, et plus cette probabilité de recouvrement augmente, de sorte que la durée des fenêtres d'écoute peut être avantageusement choisie encore plus grande, par exemple dix fois supérieure à la durée des messages descendants, voire davantage.

Dans le cas où tous les messages descendants susceptibles d'être émis par le réseau d'accès 30 ont la même durée, alors la durée des fenêtres d'écoute est de préférence constante, identique pour tous les terminaux 20.

Dans le cas où différentes durées de messages descendants sont possibles, alors la durée d'une fenêtre d'écoute peut être ajustée de manière dynamique, par exemple en fonction de la durée connue a priori du message descendant qui doit être reçu. Suivant un autre exemple, la durée des fenêtres d'écoute est de préférence constante, identique pour tous les terminaux 20, par exemple choisie au moins cinq fois supérieure à la durée maximale des messages descendants.

Dans la suite de la description, on se place de manière non limitative dans le cas où tous les messages descendants ont la même durée, et où toutes les fenêtres d'écoute ont la même durée, invariante au cours du temps. Pour des messages descendants de durée inférieure à la seconde, la durée de la fenêtre d'écoute est par exemple choisie entre 10 et 30 secondes.

La figure 2 représente schématiquement les principales étapes d'un procédé 50 de communication sans fil, qui repose sur la caractéristique selon laquelle les terminaux 20 écoutent le lien descendant sur une fenêtre d'écoute de durée très supérieure à la durée des messages descendants.

Tel qu'illustré par la figure 2, lorsque le réseau d'accès 30 reçoit plusieurs messages montants émis par des terminaux 20 différents, en réponse auxquels des messages descendants doivent être émis, le procédé 50 de communication sans fil comporte tout d'abord une étape 51 de détermination si des fenêtres d'écoute de terminaux 20 en attente de messages descendants présentent un recouvrement.

Lorsqu'il existe un recouvrement adapté à l'émission de plusieurs messages descendants par une même station de base 31, le procédé 50 de communication sans fil comporte alors une étape 52 d'émission desdits messages descendants regroupés dans une même fenêtre d'émission de ladite station de base 31, à l'intérieur dudit recouvrement.

Dans le cas (non représenté sur la figure 2) où aucun recouvrement permettant d'émettre plusieurs messages descendants par une même station de base 31 n'est identifié, lesdits messages descendants sont par exemple émis dans des fenêtres d'émission différentes d'une même station de base 31 et/ou de stations de base 31 différentes.

Du fait que les fenêtres d'écoute des terminaux 20 sont de durée très supérieure à la durée des messages descendants, la probabilité d'avoir un recouvrement entre fenêtres d'écoute adapté à l'émission de plusieurs messages descendants par une même station de base 31 est augmentée. Lorsqu'un tel recouvrement est identifié, les messages descendants correspondants sont avantageusement regroupés et émis dans une même fenêtre d'émission de ladite station de base 31, optimisant ainsi la disponibilité en réception du réseau d'accès 30 du fait que :

- une seule station de base 31 est basculée en mode émission pour émettre plusieurs messages descendants, de sorte que les autres stations de base 31 restent disponibles en réception,
- une seule fenêtre d'émission est configurée, au niveau de ladite station de base 31, pour émettre plusieurs messages descendants, de sorte que l'indisponibilité en réception, liée aux basculements en mode réception et mode émission, est fortement réduite.

L'optimisation de la disponibilité en réception du réseau d'accès 30 s'accompagne toutefois d'une légère augmentation de la consommation électrique des terminaux 20, du fait de l'allongement de la durée des fenêtres d'écoute par rapport à l'art antérieur.

De manière générale, le réseau d'accès 30 peut considérer que des messages descendants peuvent être émis par une même station de base 31 dès lors que ladite station de base 31 a reçu tous les messages montants en réponse auxquels ces messages descendants doivent être émis. En effet, les terminaux 20 correspondants peuvent alors être considérés comme étant dans la portée de ladite station de base 31. En outre, pour déterminer si un recouvrement est adapté à l'émission de plusieurs messages descendants, la durée dudit recouvrement, notamment, est prise en compte. Toutefois, la relation permettant de déterminer si cette durée est suffisante pour émettre plusieurs messages descendants dépend de la stratégie considérée pour regrouper lesdits messages descendants.

La figure 3 représente schématiquement des diagrammes temporels illustrant le déroulement de l'étape 51 de détermination si des fenêtres d'écoute de terminaux différents présentent un recouvrement. Dans l'exemple non limitatif illustré par la figure 3, la durée des fenêtres de veille est considérée comme étant la même pour tous les terminaux.

La partie a) de la figure 3 représente un diagramme temporel associé à un terminal 20-1, illustrant un message montant MM1 émis à un instant d'émission T1, ainsi que la fenêtre d'écoute ΔE1 prédéterminée à partir dudit message montant MM1. Plus particulièrement, après avoir émis le message montant MM1, le terminal 20-1 passe en mode veille sur une fenêtre de veille ΔV1. A la fin de la fenêtre de veille ΔV1, le terminal 20-1 quitte le mode veille et écoute le lien descendant sur la fenêtre d'écoute ΔE1.

La partie b) de la figure 3 représente un diagramme temporel associé à un terminal 20-2 illustrant un message montant MM2 émis à un instant d'émission T2. Après avoir émis le message montant MM2, le terminal 20-2 passe en mode veille sur une fenêtre de veille ΔV2, à la fin de laquelle ledit terminal 20-2 écoute le lien descendant sur une fenêtre d'écoute ΔE2.

La partie c) de la figure 3 représente un diagramme temporel associé à un terminal 20-3 illustrant un message montant MM3 émis à un instant d'émission T3. Après avoir émis le message montant MM3, le terminal 20-3 passe en mode veille sur une fenêtre de veille ΔV3, à la fin de laquelle ledit terminal 20-3 écoute le lien descendant sur la fenêtre d'écoute ΔE3.

De préférence, les messages montant MM1, MM2 et MM3 sont émis sur des fréquences centrales respectives FM1, FM2 et FM3 différentes, par exemple déterminées de manière autonome par les terminaux 20-1, 20-2, 20-3.

Tel qu'illustré par la figure 3, bien que les messages montants MM1, MM2 et MM3 ont été émis à des instants d'émission T1, T2 et T3 respectifs différents, les fenêtres d'écoute ΔE1, ΔE2 et ΔE3 présentent un recouvrement ΔR temporel non négligeable.

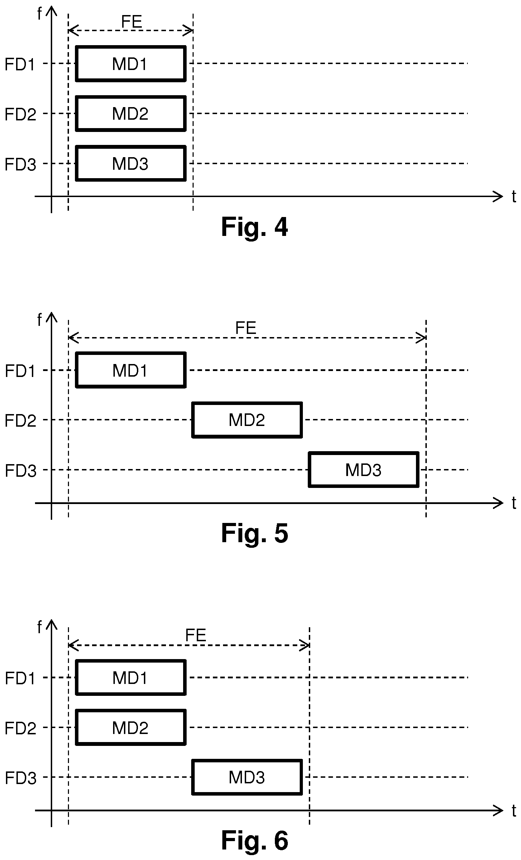

La partie d) de la figure 4 représente un diagramme temporel illustrant le comportement d'une station de base 31 qui a reçu les messages montants MM1, MM2 et MM3 au cours d'une fenêtre de réception FR1. Par conséquent, cette station de base 31 peut émettre des messages descendants MD1, MD2 et MD3 à destination des terminaux 20-1, 20-2 et 20-3. A cet effet, une fenêtre d'émission FE de ladite station de base 31 est configurée à l'intérieur du recouvrement ΔR, pour émettre lesdits messages descendants. Les messages descendants MD1, MD2 et MD3 sont par exemple générés par le serveur 32, et transmis à la station de base 31 pour être émis sur le lien descendant.

Tel qu'illustré par la partie d) de la figure 4, après avoir émis les messages descendants MD1, MD2 et MD3, une nouvelle fenêtre de réception FR2 est configurée pour ladite station de base 31. En effet, la station de base 31 est de préférence configurée par défaut en mode réception, afin de réduire la durée d'indisponibilité en réception de ladite station de base 31. Par conséquent, ladite station de base 31 est placée en mode émission uniquement lorsqu'au moins un message descendant doit être émis.

Les figures 4 à 6 représentent schématiquement des exemples non limitatifs de stratégies de regroupement des messages descendants MD1, MD2 et MD3 à l'intérieur de la fenêtre d'émission FE de la station de base 31.

Dans les exemples illustrés par les figures 4 à 6, on se place manière non limitative dans le cas où la fréquence centrale FD1, FD2, FD3 de chaque message descendant MD1, MD2, MD3 est déterminée en fonction de la fréquence centrale FM1, FM2, FM3 du message montant MM1, MM2, MM3. Par exemple, les fréquences centrales FD1, FD2, FD3 sont déterminées en fonction de décalages fréquentiels ΔF1, ΔF2, ΔF3 prédéfinis, associés respectivement aux terminaux 20-1, 20-2, 20-3, selon l'expression suivante :

$$FD_i = FM_i + \Delta F_i \ (i = 1, 2, 3)$$

Chaque décalage fréquentiel ΔF1, ΔF2 et ΔF3 est par exemple connu a priori du réseau d'accès 30 et du terminal 20-1, 20-2 et 20-3 correspondant. Il est à noter que d'autres règles de correspondance peuvent également être envisagées, dès lors qu'elles permettent à la fois à un terminal 20 et au réseau d'accès 30 de déterminer la fréquence centrale d'un message descendant à partir de la fréquence centrale d'un message montant émis par ledit terminal.

Il est particulièrement avantageux de déterminer la fréquence centrale du message descendant à partir de la fréquence centrale du message montant, car la référence fréquentielle d'un terminal 20 peut être indépendante de la référence fréquentielle des stations de base 31 (qui elles-mêmes peuvent être indépendantes les unes des autres). En outre, ces références fréquentielles n'ont pas à être précises dès lors que la dérive des références fréquentielles est faible entre l'émission / réception d'un message montant et l'émission / réception du message descendant associé. Par exemple, si le terminal 20-1 émet un message montant MM1 sur une fréquence centrale FM1' qui correspond à (FM1 + b1), b1 correspondant à un biais, alors le réseau d'accès 30, qui ne sait pas a priori sur quelles fréquences centrales les terminaux 20 émettent des messages montants, détecte ce message montant MM1 et sa fréquence centrale est mesurée par le réseau d'accès 30 à une valeur sensiblement égale à FM1'. Le terminal 20-1 et le réseau d'accès 30 déterminent tous deux la fréquence centrale FD1' sur laquelle doit être reçu / émis le message descendant MD1 selon l'expression :

$$FD1' = FM1' + \Delta F1 = FM1 + \Delta F1 + b1$$

Ainsi, même si la précision sur la fréquence centrale FM1 est faible du fait que le biais b1 peut être élevé, la fréquence centrale FD1' sera sensiblement la même côté terminal 20-1 et côté réseau d'accès 30, du fait notamment que celle-ci est déterminée du côté du réseau d'accès relativement à la fréquence centrale FM1' mesurée du message montant MM1. Par conséquent, des moyens de synthèse de référence fréquentielle peu coûteux peuvent être mis en oeuvre, notamment dans les terminaux 20.

Dans la suite de la description, on se place de manière non limitative dans le cas où les décalages fréquentiels ΔF1, ΔF2 et ΔF3 sont identiques, de sorte que, les fréquences centrales FM1, FM2, FM3 étant différentes, les fréquences centrales FD1, FD2, FD3 le sont également.

La figure 4 représente un premier exemple de stratégie de regroupement dans laquelle les messages descendants MD1, MD2, MD3 sont regroupés fréquentiellement, c'est-à-dire émis simultanément sur leurs fréquences centrales FD1, FD2, FD3 respectives. Par « émis simultanément », on entend de manière générale que lesdits messages descendants présentent un recouvrement temporel. En l'occurrence, dans l'exemple illustré par la figure 4, les messages descendants MD1, MD2, MD3 ont tous la même durée et sont émis exactement au même instant d'émission, de sorte que le recouvrement temporel est total. La durée de la fenêtre d'émission FE, utilisée pour émettre trois messages descendants MD1, MD2, MD3, peut être réduite à la durée d'un seul message descendant.

Bien que les terminaux 20 émettent de façon asynchrone, c'est-à-dire que les messages montants sont le plus souvent reçus à des instants différents par le réseau d'accès 30, il est néanmoins possible d'émettre les messages descendants simultanément grâce au fait que les fenêtres d'écoute sont de durée très supérieure à la durée des messages descendants.

La figure 5 représente un second exemple de stratégie de regroupement dans laquelle les messages descendants MD1, MD2, MD3 sont regroupés temporellement, c'est-à-dire émis successivement, sans recouvrement temporel. Dans un tel cas, la réduction de la durée d'indisponibilité en réception de la station de base 31 est principalement liée à la réduction du nombre de basculements entre mode réception et mode émission, et au fait que l'écart entre deux messages descendants successifs peut être arbitrairement faible.

Afin de réduire davantage la durée d'indisponibilité en réception, les messages descendants MD1, MD2, MD3 peuvent être émis avec un débit supérieur au débit des messages montants, choisi par exemple de telle sorte qu'au moins deux messages descendants peuvent être émis sur une durée inférieure à la durée maximale d'un message montant. De manière plus générale, l'utilisation d'un débit, sur le lien descendant, supérieur au débit sur le lien montant, au moins pour certains messages descendants, peut être envisagée pour chacune des stratégies de regroupement.

La figure 6 représente un troisième exemple non limitatif de stratégie de regroupement dans laquelle les messages descendants MD1, MD2, MD3 sont regroupés à la fois fréquentiellement et temporellement. Plus particulièrement, les messages descendants MD1 et MD2 sont regroupés fréquentiellement (émis simultanément sur leurs fréquences centrales FD1 et FD2 respectives), et le message descendant MD3 est émis après lesdits messages descendants MD1 et MD2, sur la fréquence centrale FD3.

Le regroupement des messages descendants à la fois fréquentiellement et temporellement peut par exemple être nécessaire pour respecter des contraintes réglementaires en termes de puissance maximale d'émission dans la bande fréquentielle considérée. Dans un tel cas, le regroupement fréquentiel est privilégié tant que la puissance instantanée totale des messages descendants regroupés fréquentiellement est inférieure à ladite puissance maximale. S'il n'est pas possible de regrouper fréquentiellement tous les messages descendants, alors certains messages descendants peuvent être regroupés fréquentiellement, et les autres messages descendants peuvent être émis après, éventuellement regroupés fréquentiellement entre eux. Il est possible d'effectuer un contrôle de la puissance instantanée de chaque message descendant afin de la limiter au strict minimum et maximiser ainsi le nombre de messages descendants qui peuvent être regroupés fréquentiellement.

De manière plus générale, il est à noter que les modes de mise en oeuvre et de réalisation considérés ci-dessus ont été décrits à titre d'exemples non limitatifs, et que d'autres variantes sont par conséquent envisageables.

Notamment, l'invention a été décrite en considérant un système 10 de communication sans fil comportant uniquement des terminaux 20 synchrones en réception. Rien n'exclut, suivant d'autres exemples, d'avoir une coexistence entre des terminaux 20 synchrones en réception et des terminaux asynchrones en réception, c'est-à-dire des terminaux adaptés à recevoir des messages descendants à tout instant.

Dans un tel cas, lorsqu'un message descendant doit être émis à destination d'un terminal asynchrone en réception, le procédé 50 comporte des étapes (non représentées sur les figures) de :

- détermination si ledit message descendant peut être émis par une station de base 31 prévue pour émettre un message descendant en réponse à un message montant émis par un terminal 20 synchrone en réception,
- lorsque ledit message descendant à destination du terminal asynchrone en réception peut être émis par la station de base 31 prévue pour émettre un message descendant à destination d'un terminal synchrone en réception : émission desdits messages descendants regroupés dans une même fenêtre d'émission de ladite station de base 31.

## Revendications

1. Procédé (50) de communication sans fil entre une pluralité de terminaux (20) et un réseau d'accès (30), lesdits terminaux émettant de façon asynchrone des messages montants sur un lien montant à destination du réseau d'accès, ledit réseau d'accès étant configuré pour émettre des messages descendants sur un lien descendant en réponse à tout ou partie des messages montants, ledit réseau d'accès comportant une pluralité de stations de base (31) configurées pour émettre des messages descendants dans des fenêtres d'émission au cours desquelles lesdites stations de base ne peuvent pas recevoir de messages montants, **caractérisé en ce que,** chaque terminal en attente d'un message descendant en réponse à un message montant émis étant configuré pour écouter le lien descendant sur une fenêtre d'écoute prédéterminée par rapport audit message montant, ladite fenêtre d'écoute étant de durée au moins cinq fois supérieure à la durée du message descendant, le procédé comporte des étapes de :

- (51) détermination si des fenêtres d'écoute de terminaux en attente de messages descendants présentent un recouvrement,
- lorsqu'il existe un recouvrement adapté à l'émission de plusieurs messages descendants par une même station de base : (52) émission desdits messages descendants regroupés dans une même fenêtre d'émission de ladite station de base, à l'intérieur dudit recouvrement.

2. Procédé (50) selon la revendication 1, dans lequel, lorsque des messages descendants sont émis regroupés dans une même fenêtre d'émission d'une station de base, au moins deux messages descendants sont émis simultanément sur des fréquences centrales respectives différentes.

3. Procédé (50) selon la revendication 2, dans lequel la fréquence centrale d'un message descendant émis en réponse à un message montant est déterminée en fonction de la fréquence centrale dudit message montant.

4. Procédé (50) selon l'une des revendications précédentes, dans lequel, lorsque des messages descendants sont émis regroupés dans une même fenêtre d'émission d'une station de base, au moins deux messages descendants sont émis successivement.

5. Procédé (50) selon l'une des revendications précédentes, dans lequel, lorsque plusieurs messages descendants peuvent être regroupés dans une même fenêtre d'émission d'une station de base, lesdits messages descendants sont regroupés fréquentiellement en étant émis simultanément sur des fréquences centrales respectives différentes, tant que la puissance instantanée totale desdits messages descendants regroupés fréquentiellement est inférieure à une puissance maximale prédéfinie, puis sont regroupés temporellement en étant émis successivement si ladite puissance instantanée totale desdits messages descendants regroupés fréquentiellement devient supérieure à ladite puissance maximale, de sorte que la puissance instantanée totale reste inférieure à ladite puissance maximale pendant toute la durée de la fenêtre d'émission.

6. Procédé (50) selon l'une des revendications précédentes, dans lequel, lorsque des messages descendants sont émis regroupés dans une même fenêtre d'émission d'une station de base, au moins un message descendant est émis avec un débit supérieur au débit du message montant en réponse auquel ledit message descendant est émis.

7. Procédé (50) selon l'une des revendications précédentes, dans lequel, le système de communications sans fil comportant également plusieurs terminaux, dits « terminaux asynchrones en réception », adaptés à recevoir des messages descendants à tout instant, ledit procédé comporte, lorsqu'un message descendant doit être émis à destination d'un terminal asynchrone en réception, des étapes de :

    - détermination si ledit message descendant peut être émis par une station de base prévue pour émettre un message descendant en réponse à un message montant émis par un terminal, dit « terminal synchrone en réception »,
    - lorsque ledit message descendant à destination du terminal asynchrone en réception peut être émis par la station de base prévue pour émettre un message descendant à destination d'un terminal synchrone en réception : émettre lesdits messages descendants regroupés dans une même fenêtre d'émission de ladite station de base.

8. Terminal (20) d'un système (10) de communications sans fil, ledit terminal étant adapté à émettre des messages montants sur un lien montant à destination d'un réseau d'accès (30), ledit réseau d'accès étant adapté à émettre des messages descendants sur un lien descendant à destination dudit terminal en réponse à tout ou partie des messages montants, ledit terminal étant configuré pour, lorsqu'il a émis un message montant en réponse auquel le réseau d'accès doit émettre un message descendant, écouter le lien descendant, pour recevoir le message descendant, sur une fenêtre d'écoute prédéterminée par rapport audit message montant, **caractérisé en ce que** la durée de la fenêtre d'écoute est au moins cinq fois supérieure à la durée du message descendant.

9. Terminal (20) selon la revendication 8, configuré pour, lorsqu'il a émis un message montant en réponse auquel le réseau d'accès doit émettre un message descendant, passer dans un mode veille sur une fenêtre de veille de durée prédéterminée et, après la fenêtre de veille, écouter le lien descendant sur la fenêtre d'écoute.

10. Réseau d'accès (30) d'un système (10) de communications sans fil comportant une pluralité de stations de base (31) configurées pour émettre des signaux radioélectriques dans des fenêtres d'émission au cours desquelles lesdites stations de base ne peuvent pas recevoir de signaux radioélectriques, **caractérisé en ce que,** ledit système comportant une pluralité de terminaux (20) selon l'une des revendications 8 à 9, lesdits terminaux émettant de façon asynchrone des messages montants sur le lien montant, ledit réseau d'accès est configuré pour :

    - déterminer si des fenêtres d'écoute de terminaux en attente de messages descendants présentent un recouvrement,
    - lorsqu'il existe un recouvrement adapté à l'émission de plusieurs messages descendants par une même station de base : émettre lesdits messages descendants regroupés dans une même fenêtre d'émission de ladite station de base, à l'intérieur dudit recouvrement.

11. Réseau d'accès (30) selon la revendication 10, dans lequel, lorsque des messages descendants sont émis regroupés dans une même fenêtre d'émission d'une station de base, au moins deux messages descendants sont émis simultanément sur des fréquences centrales respectives différentes.

12. Réseau d'accès (30) selon la revendication 11, dans lequel la fréquence centrale d'un message descendant émis en réponse à un message montant reçu est déterminée en fonction de la fréquence centrale, mesurée par ledit réseau d'accès, dudit message montant reçu.

13. Réseau d'accès (30) selon l'une des revendications 10 à 12, dans lequel, lorsque des messages descendants sont émis regroupés dans une même fenêtre d'émission d'une station de base, au moins deux messages descendants sont émis successivement.

14. Réseau d'accès (30) selon l'une des revendications 10 à 13, dans lequel chaque station de base est configurée pour fonctionner par défaut dans un mode réception, dans lequel ladite station de base peut recevoir des messages montants mais ne peut pas émettre de messages descendants.

15. Système (10) de communication sans fil, **caractérisé en ce qu'**il comporte une pluralité de terminaux (20) selon l'une des revendications 8 à 9 et un réseau d'accès (30) selon l'une des revendications 10 à 14.

**Patentansprüche**

1. Verfahren (50) zur drahtlosen Kommunikation zwischen einer Vielzahl von Endgeräten (20) und einem Zugriffsnetzwerk (30), wobei die Endgeräte asynchron Aufwärts-Nachrichten auf einer Aufwärts-Verbindung an das Zugriffsnetzwerk senden, wobei das Zugriffsnetzwerk konfiguriert ist, um Abwärts-Nachrichten auf einer Abwärts-Verbindung als Reaktion auf alle oder einen Teil der Aufwärts-Nachrichten zu senden, wobei das Zugriffsnetzwerk eine Vielzahl von Basisstationen (31) beinhaltet, die konfiguriert sind, um Abwärts-Nachrichten in Sendefenstern zu senden, in denen die Basisstationen keine Aufwärts-Nachrichten empfangen können, **dadurch gekennzeichnet, dass**, da jedes Endgerät in Erwartung einer Abwärts-Nachricht als Reaktion auf eine gesendete Aufwärts-Nachricht konfiguriert ist, um die Abwärts-Verbindung auf einem im Verhältnis zur Aufwärts-Nachricht vorbestimmten Hörfenster zu hören, wobei das Hörfenster eine Dauer mindestens fünf Mal länger als die Dauer der Abwärts-Nachricht aufweist, das Verfahren die folgenden Schritte beinhaltet:

   - (51) Bestimmen, ob die Hörfenster von Endgeräten in Erwartung von Abwärts-Nachrichten eine Überlappung aufweisen,
   - wenn eine zum Senden mehrerer Abwärts-Nachrichten durch eine selbe Basisstation geeignete Überlappung existiert: (52) Senden der zusammengefassten Abwärts-Nachrichten in einem selben Sendefenster der Basisstation innerhalb der Überlappung.

2. Verfahren (50) nach Anspruch 1, wobei, wenn Abwärts-Nachrichten zusammengefasst in einem selben Sendefenster einer Basisstation gesendet werden, mindestens zwei Abwärts-Nachrichten auf jeweiligen unterschiedlichen Mittenfrequenzen gleichzeitig gesendet werden.

3. Verfahren (50) nach Anspruch 2, wobei die Mittenfrequenz einer als Reaktion auf eine Aufwärts-Nachricht gesendete Abwärts-Nachricht in Abhängigkeit von der Mittenfrequenz der Aufwärts-Nachricht bestimmt wird.

4. Verfahren (50) nach einem der vorstehenden Ansprüche, wobei, wenn die Abwärts-Nachrichten zusammengefasst in einem selben Sendefenster einer Basisstation gesendet werden, mindestens zwei Abwärts-Nachrichten nacheinander gesendet werden.

5. Verfahren (50) nach einem der vorstehenden Ansprüche, wobei, wenn mehrere Abwärts-Nachrichten in einem selben Sendefenster einer Basisstation zusammengefasst werden können, die Abwärts-Nachrichten frequenzabhängig zusammengefasst werden, indem sie auf jeweiligen unterschiedlichen Mittenfrequenzen gleichzeitig gesendet werden, solange die momentane Gesamtleistung der frequenzabhängig zusammengefassten Abwärts-Nachrichten kleiner als eine vordefinierte maximale Leistung ist, danach zeitabhängig zusammengefasst werden, indem sie nacheinander gesendet werden, wenn die momentane Gesamtleistung der frequenzabhängig zusammengefassten Abwärts-Nachrichten größer als die maximale Leistung wird, sodass die momentane Gesamtleistung während der gesamten Dauer des Sendefensters kleiner als die maximale Leistung bleibt.

6. Verfahren (50) nach einem der vorstehenden Ansprüche, wobei, wenn Abwärts-Nachrichten zusammengefasst in einem selben Sendefenster einer Basisstation gesendet werden, mindestens eine Abwärts-Nachrichten mit einem Durchsatz größer als der Durchsatz der Aufwärts-Nachricht gesendet wird, als deren Reaktion die Abwärts-Nachrichten gesendet wird.

7. Verfahren (50) nach einem der vorstehenden Ansprüche, wobei, da das System zur drahtlosen Kommunikation auch mehrere Endgeräte beinhaltet, die "asynchrone Empfangsendgeräte" genannt werden, die angepasst sind, jederzeit Abwärts-Nachrichten zu empfangen, das Verfahren, wenn eine Abwärts-Nachricht zu einem asynchronen Empfangsendgerät gesendet werden muss, die folgenden Schritte beinhaltet:

   - Bestimmen, ob die Abwärts-Nachricht durch eine Basisstation gesendet werden kann, die vorgesehen ist, um eine Abwärts-Nachricht als Reaktion auf eine Aufwärts-Nachricht zu senden, die durch ein "synchrones Empfangsendgerät" genanntes Endgerät gesendet wird,
   - wenn die Abwärts-Nachricht zum asynchronen Empfangsendgerät durch die Basisstation gesendet werden kann, die vorgesehen ist, um eine Abwärts-Nachricht an ein synchrones Empfangsendgerät zu senden: Senden der zusammengefassten Abwärts-Nachrichten in einem selben Sendefenster der Basisstation.

8. Endgerät (20) eines Systems (10) zur drahtlosen Kommunikation, wobei das Endgerät angepasst ist, Aufwärts-Nachrichten auf einer Aufwärtsverbindung an ein Zugriffsnetzwerk (30) zu senden, wobei das Zugriffsnetzwerk angepasst ist, um Abwärts-Nachrichten auf einer Aufwärts-Verbindung an das Endgerät als Reaktion auf alle oder einen Teil der Aufwärts-Nachrichten zu senden, wobei das Endgerät konfiguriert ist, um, wenn es eine Aufwärts-Nachricht gesendet hat, als deren Reaktion das Zugriffsnetzwerk eine Abwärts-Nachricht senden muss, die Abwärts-Verbindung zu hören, um die Abwärts-Nachricht auf einem im Verhältnis zur Aufwärts-Nachricht vorbestimmten Hörfenster zu empfangen, **dadurch gekennzeichnet, dass** die Dauer des Hörfensters mindestens fünf Mal länger als die Dauer der Abwärts-Nachricht ist.

9. Endgerät (20) nach Anspruch 8, konfiguriert, um, wenn es eine Aufwärts-Nachricht gesendet hat, als deren Reaktion das Zugriffsnetzwerk eine Abwärts-Nachricht senden muss, in einen Standby-Modus in ein Standby-Fenster einer vorbestimmten Dauer überzugehen, und nach dem Standby-Fenster die Abwärts-Verbindung in dem Hörfenster zu hören.

10. Zugriffsnetzwerk (30) eines Systems (10) zur drahtlosen Kommunikation, eine Vielzahl von Basisstationen (31) beinhaltend, die konfiguriert sind, um Funksignale in Sendefenstern zu senden, im Laufe derer die Basisstationen keine Funksignale empfangen können, **dadurch gekennzeichnet, dass**, da das System eine Vielzahl von Endgeräten (20) nach einem der Ansprüche 8 bis 9 beinhaltet, wobei die Endgeräte asynchron Aufwärts-Nachrichten auf der Aufwärts-Verbindung senden, das Zugriffsnetzwerk konfiguriert ist, um:

- zu bestimmen, ob Hörfenster von Endgeräten in Erwartung von Abwärts-Nachrichten eine Überlappung aufweisen,
- wenn eine zum Senden mehrerer Abwärts-Nachrichten durch eine selbe Basisstation geeignete Überlappung existiert: die zusammengefassten Abwärts-Nachrichten in einem selben Sendefenster der Basisstation innerhalb der Überlappung zu senden.

11. Zugriffsnetzwerk (30) nach Anspruch 10, wobei, wenn die Abwärts-Nachrichten zusammengefasst in einem selben Sendefenster einer Basisstation gesendet werden, mindestens zwei Abwärts-Nachrichten auf jeweiligen unterschiedlichen Mittenfrequenzen gleichzeitig gesendet werden.

12. Zugriffsnetzwerk (30) nach Anspruch 11, wobei die Mittenfrequenz einer Abwärts-Nachricht, die als Reaktion auf eine empfangene Aufwärts-Nachricht gesendet wird, in Abhängigkeit von der Mittenfrequenz, gemessen durch das Zugriffsnetz, der empfangenen Aufwärts-Nachricht bestimmt wird.

13. Zugriffsnetzwerk (30) nach einem der Ansprüche 10 bis 12, wobei, wenn Abwärts-Nachrichten zusammengefasst in einem selben Sendefenster einer Basisstation gesendet werden, mindestens zwei Abwärts-Nachrichten nacheinander gesendet werden.

14. Zugriffsnetzwerk (30) nach einem der Ansprüche 10 bis 13, wobei jede Basisstation konfiguriert ist, um standardgemäß in einem Empfangsmodus zu funktionieren, in dem die Basisstation Aufwärts-Nachrichten empfangen kann, jedoch keine Abwärts-Nachrichten senden kann.

15. System (10) zur drahtlosen Kommunikation, **dadurch gekennzeichnet, dass** es eine Vielzahl von Endgeräten (20) nach einem der Ansprüche 8 bis 9, und ein Zugriffsnetzwerk (30) nach einem der Ansprüche 10 bis 14 beinhaltet.

## Claims

1. A method (50) for wireless communication between a plurality of terminals (20) and an access network (30), said terminals asynchronously transmitting uplink messages over an uplink to the access network, said access network being configured to transmit downlink messages over a downlink in response to all or some of the uplink messages, said access network including a plurality of base stations (31) that are configured to transmit downlink messages within transmission windows in which said base stations are not able to receive uplink messages, **characterized in that,** each terminal awaiting a downlink message in response to a transmitted uplink message being configured to listen to the downlink during a listening window that is predetermined with respect to said uplink message, the duration of said listening window being at least five times longer than the duration of the downlink message, the method includes steps of:

- (51) determining whether listening windows of terminals awaiting downlink messages exhibit overlap;
- when there is an overlap suitable for the transmission of multiple downlink messages by one and the same base station: (52) said downlink messages, grouped together within one and the same transmission window of said base station, are transmitted within said overlap.

2. The method (50) as claimed in claim 1, in which, when downlink messages are transmitted grouped together within one and the same transmission window of a base station, at least two downlink messages are transmitted simultaneously at different respective center frequencies.

3. The method (50) as claimed in claim 2, in which the center frequency of a downlink message transmitted in response to an uplink message is determined according to the center frequency of said uplink message.

**4.** The method (50) as claimed in one of the preceding claims, in which, when downlink messages are transmitted grouped together within one and the same transmission window of a base station, at least two downlink messages are transmitted in succession.

**5.** The method (50) as claimed in one of the preceding claims, in which, when multiple downlink messages may be grouped together within one and the same transmission window of a base station, said downlink messages are grouped together in frequency by being transmitted simultaneously at different respective center frequencies, as long as the total instantaneous power of said downlink messages that are grouped together in frequency is lower than a predefined maximum power, then they are grouped together temporally by being transmitted in succession if said total instantaneous power of said downlink messages grouped together in frequency becomes higher than said maximum power, such that the total instantaneous power remains lower than said maximum power over the duration of the transmission window.

**6.** The method (50) as claimed in one of the preceding claims, in which, when downlink messages are transmitted grouped together within one and the same transmission window of a base station, at least one downlink message is transmitted with a bit rate that is higher than the bit rate of the uplink message in response to which said downlink message is transmitted.

**7.** The method (50) as claimed in one of the preceding claims, in which, the wireless communication system also including multiple terminals, referred to as "asynchronous reception terminals", which are suitable for receiving downlink messages at any time, said method includes, when a downlink message must be transmitted to an asynchronous reception terminal, steps of:

- determining whether said downlink message may be transmitted by a base station scheduled for transmitting a downlink message in response to an uplink message transmitted by a terminal referred to as a "synchronous reception terminal";
- when said downlink message intended for the asynchronous reception terminal may be transmitted by the base station scheduled for transmitting a downlink message to a synchronous reception terminal: said downlink messages, grouped together within one and the same transmission window, are transmitted from said base station.

**8.** A terminal (20) of a wireless communication system (10), said terminal being suitable for transmitting uplink messages over an uplink to an access network (30), said access network being suitable for transmitting downlink messages over a downlink to said terminal in response to all or some of the uplink messages, said terminal being configured, once it has transmitted an uplink message in response to which the access network must transmit a downlink message, to listen to the downlink, in order to receive the downlink message, during a listening window that is predetermined with respect to said uplink message, **characterized in that** the duration of the listening window is at least five times longer than the duration of the downlink message.

**9.** The terminal (20) as claimed in claim 8, configured, once it has transmitted an uplink message in response to which the access network must transmit a downlink message, to switch to a standby mode for a standby window of predetermined duration and, after the standby window, to listen to the downlink during the listening window.

**10.** An access network (30) of a wireless communication system (10) including a plurality of base stations (31) that are configured to transmit radio signals within transmission windows in which said base stations are not able to receive radio signals, **characterized in that,** said system including a plurality of terminals (20) as claimed in one of claims 8 and 9, said terminals asynchronously transmitting uplink messages over the uplink, said access network is configured:

- to determine whether listening windows of terminals awaiting downlink messages exhibit overlap;
- when there is an overlap suitable for the transmission of multiple downlink messages by one and the same base station: to transmit said downlink messages, grouped together within one and the same transmission window of said base station, within said overlap.

**11.** The access network (30) as claimed in claim 10, in which, when downlink messages are transmitted grouped together within one and the same transmission window of a base station, at least two downlink messages are transmitted simultaneously at different respective center frequencies.

**12.** The access network (30) as claimed in claim 11, in which the center frequency of a downlink message transmitted in response to a received uplink message is determined according to the center frequency, measured by said access network, of said received uplink message.

**13.** The access network (30) as claimed in one of claims 10 to 12, in which, when downlink messages are transmitted grouped together within one and the same transmission window of a base station, at least two downlink messages are transmitted in succession.

14. The access network (30) as claimed in one of claims 10 to 13, in which each base station is configured to operate by default in a reception mode, in which said base station may receive uplink messages but may not transmit downlink messages.

15. A wireless communication system (10), **characterized in that** it includes a plurality of terminals (20) as claimed in one of claims 8 and 9 and an access network (30) as claimed in one of claims 10 to 14.

**Fig. 1**

Fenêtres d'écoute

50

Détermination de recouvrement entre fenêtres d'écoute — 51

Emission de messages descendants regroupés — 52

**Fig. 2**

**Fig. 3**

a) Terminal 20-1

b) Terminal 20-2

c) Terminal 20-2

d) Station de base

**Fig. 4**

**Fig. 5**

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6130914 A